# EUROPÄISCHE PATENTSCHRIFT

(11) **EP 3 834 219 B1**
(45) Veröffentlichungstag und Bekanntmachung des Hinweises auf die Patenterteilung: **17.08.2022**
(21) Anmeldenummer: 19769080.3
(22) Anmeldetag: 04.09.2019
(51) Int. Cl.: H01H 3/40, H01H 3/46, H01H 33/02, H01H 33/42, H02B 13/035, H01H 33/50, H01H 33/28

(54) **GASISOLIERTE SCHALTANLAGE**
GASINSULATED SWITCHGEAR
APPAREILLAGE À ISOLATION GAZEUSE

(30) Priorität: 01.10.2018 DE 102018216852
(43) Veröffentlichungstag der Anmeldung: 16.06.2021
(73) Patentinhaber: Siemens Energy Global GmbH & Co. KG, 81739 München (DE)
(72) Erfinder: MONKA, Roland, 10318 Berlin (DE)
(86) Internationale Anmeldenummer: PCT/EP2019/073551
(87) Internationale Veröffentlichungsnummer: WO 2020/069809

(56) Entgegenhaltungen:
- EP-A1- 2 597 662
- US-A1- 2012 228 266

## Beschreibung

Die Erfindung betrifft eine gasisolierte Schaltanlage mit drei Kapselungsgehäusen mit jeweils einem durch einen Antrieb antreibbaren Antriebselement zum Öffnen und Schließen eines Schaltkontaktes.

Bei derartigen gasisolierten Schaltanlagen kompakter Bauart erweist sich die Verbindung der Antriebselemente mit dem jeweiligen Antrieb wegen des begrenzten Bauraums oft als schwierig. Insbesondere müssen Koppelelemente, die die Antriebselemente mit dem jeweiligen Antrieb verbinden, derart angeordnet werden, dass sie sich nicht gegenseitig im Wege stehen. Aus der veröffentlichten Patentanmeldung US 2012/0228266 A1 ist ein Vakuumleistungsschalter gemäß dem Oberbegriff des Anspruchs 1 bekannt, welcher mehrere Einzelphasen aufweist. Die Einzelphasen sind dabei im Wesentlichen baugleich ausgeführt. Zum Antreiben relativ zueinander bewegbarer Schaltkontaktstücke der Einzelphasen ist ein gemeinsamer Antrieb vorgesehen. Um eine Bewegung in die Einzelphasen einleiten zu können, sind Antriebsstangen und Umlenkhebel notwendig. Durch ein mehrfaches Umlenken und die verschiedenen Übertragungselemente können Abweichungen beim Öffnen und Schließen des Schaltkontaktes auftreten. Aus der europäischen Patentanmeldung EP 2 597 662 A1 ist ein Erdschalter für gasisolierte Mittel oder Hochspannungsanlagen entnehmbar.

Der Erfindung liegt die Aufgabe zugrunde, eine verbesserte gasisolierte Schaltanlage anzugeben, die drei Kapselungsgehäuse mit jeweils einem durch einen Antrieb antreibbaren Antriebselement zum verbesserten Öffnen und Schließen eines Schaltkontaktes aufweist.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße gasisolierte Schaltanlage umfasst drei baugleiche Kapselungsgehäuse, für jedes Kapselungsgehäuse ein zum Öffnen und Schließen eines Schaltkontaktes antreibbares Antriebselement und für jedes Antriebselement ein Koppelelement. Jedes Kapselungsgehäuse ist im Wesentlichen achsensymmetrisch bezüglich einer Symmetrieachse ausgebildet. Jedes Antriebselement erstreckt sich in einem Kapselungsgehäuse entlang einer Antriebsachse, die parallel zu der Symmetrieachse des Kapselungsgehäuses und von der Symmetrieachse beabstandet verläuft, wobei die Anordnung des Antriebselements in dem Kapselungsgehäuse für alle Kapselungsgehäuse übereinstimmt. Jedes Koppelelement erstreckt sich entlang einer Koppelachse und ist durch eine Getriebeeinheit an ein Antriebselement gekoppelt und durch einen außerhalb der Kapselungsgehäuse angeordneten Antrieb antreibbar. Die Symmetrieachsen aller drei Kapselungsgehäuse verlaufen parallel zueinander in einer Symmetrieachsenebene. Die Antriebsachsen eines ersten Kapselungsgehäuses und eines zweiten Kapselungsgehäuses verlaufen in einer zu der Symmetrieachsenebene parallelen und von der Symmetrieachsenebene beabstandeten Antriebsachsenebene und die Antriebsachse des dritten Kapselungsgehäuses verläuft in demselben Abstand von der Symmetrieachsenebene wie die Antriebsachsenebene auf einer anderen Seite der Symmetrieachsenebene als die Antriebsachsenebene. Unter einer Achse wird hier eine Gerade im mathematischen Sinn verstanden. Zwei Achsen werden als auf verschiedenen Seiten einer Ebene verlaufend bezeichnet, wenn sie in verschiedenen Halbräumen verlaufen, die durch die Ebene voneinander getrennt sind. Entsprechend werden zwei Objekte als auf verschiedenen Seiten einer Ebene angeordnet bezeichnet, wenn sie in verschiedenen Halbräumen angeordnet sind, die durch die Ebene voneinander getrennt sind.

Erfindungsgemäß sind die drei Kapselungsgehäuse nebeneinander angeordnet, so dass ihre Symmetrieachsen parallel zueinander in einer gemeinsamen Symmetrieachsenebene verlaufen. Ferner verlaufen die Antriebsachsen zweier Kapselungsgehäuse auf einer Seite der Symmetrieachsenebene und die Antriebsachse des dritten Kapselungsgehäuses verläuft auf der anderen Seite Symmetrieachsenebene, wobei alle Antriebsachsen denselben Abstand zu der Symmetrieachsenebene aufweisen. Da die drei Kapselungsgehäuse im Wesentlichen achsensymmetrisch bezüglich ihrer jeweiligen Symmetrieachse ausgebildet sind und die Anordnung des Antriebselements in dem Kapselungsgehäuse für alle Kapselungsgehäuse übereinstimmt, wird dies dadurch erreicht, dass das dritte Kapselungsgehäuse gegenüber den beiden anderen Kapselungsgehäusen um 180 Grad um seine Symmetrieachse gedreht ist, während die anderen beiden Kapselungsgehäuse nur zueinander parallel verschoben angeordnet sind. Durch einen ausreichenden Abstand der Antriebsachse von der Symmetrieachse eines Kapselungsgehäuses kann dadurch ermöglicht werden, dass mit baugleich ausgeführten und nebeneinander angeordneten Kapselungsgehäusen alle Antriebselemente über jeweils ein starr ausgeführtes Koppelelement in einfacher Weise angetrieben werden können, wozu sonst beispielsweise flexible Koppelelemente, eine räumlich gegeneinander versetzte Anordnung der Kapselungsgehäuse und/oder voneinander verschiedene Kapselungsgehäuse erforderlich sind.

Ausgestaltungen der Erfindung sehen vor, dass die Koppelachsen aller drei Koppelelemente parallel zueinander verlaufen, und/oder dass die Koppelachsen senkrecht zu den Antriebsachsen verlaufen. Diese Ausgestaltungen der Erfindung ermöglichen konstruktiv besonders einfache und platzsparende Anordnungen der Koppelelemente.

Eine weitere Ausgestaltung der Erfindung sieht vor, dass ein erstes Koppelelement, das an das Antriebselement des ersten Kapselungsgehäuses gekoppelt ist, und ein zweites Koppelelement, das an das Antriebselement des zweiten Kapselungsgehäuses gekoppelt ist, auf voneinander verschiedenen Seiten der Antriebsachsenebene angeordnet sind. Dadurch wird vorteilhaft verhindert, dass sich das erste Koppelelement und das zweite Koppelelement gegenseitig im Wege stehen.

Eine weitere Ausgestaltung der Erfindung sieht vor, dass der Abstand der Antriebsachsenebene von der Symmetrieachsenebene gleich dem Abstand der Antriebsachse von der Symmetrieachse eines Kapselungsgehäuses ist. Diese Ausgestaltung der Erfindung realisiert vorteilhaft einen maximal möglichen Abstand der Antriebsachsenebene von der Symmetrieachsenebene und damit auch einen maximalen Bauraum für die Anordnung von Koppelelementen zwischen der Antriebsachsenebene und einer dazu parallelen Ebene, in der die Antriebsachse des dritten Kapselungsgehäuses liegt.

Eine weitere Ausgestaltung der Erfindung sieht vor, dass jedes Koppelelement als eine Koppelwelle ausgebildet ist, die durch den Antrieb um ihre Koppelachse drehbar ist. Dabei kann beispielsweise jedes Koppelelement durch eine ein Schneckengetriebe aufweisende Getriebeeinheit an ein Antriebselement gekoppelt sein. Diese Ausgestaltung der Erfindung ermöglicht einen platzsparenden Antrieb der Antriebselemente durch rotatorisch bewegte Koppelelemente.

Eine zur vorgenannten Ausgestaltung alternative Ausgestaltung der Erfindung sieht vor, dass jedes Koppelelement als eine Koppelstange ausgebildet ist, die durch ihren Antrieb entlang der Koppelachse verschiebbar ist. Dabei kann beispielsweise jedes Koppelelement durch eine Getriebeeinheit, die ein Hebelgetriebe oder ein Zahnstangengetriebe aufweist, an ein Antriebselement gekoppelt sein. Diese Ausgestaltung der Erfindung ermöglicht einen Antrieb der Antriebselemente durch translatorisch bewegte Koppelelemente.

Eine weitere Ausgestaltung der Erfindung sieht vor, dass jedes Antriebselement als eine um die Antriebsachse drehbare Antriebswelle ausgebildet ist. Diese Ausgestaltung der Erfindung ermöglicht eine platzsparende Betätigung der Schaltkontakte durch rotatorisch bewegte Antriebselemente.

Weitere Ausgestaltungen der Erfindung sehen vor, dass die Schaltanlage entweder für jedes Koppelelement einen separaten Antrieb oder einen gemeinsamen Antrieb für alle Koppelelemente aufweist. Separate Antriebe für die Koppelelemente ermöglichen voneinander unabhängige Bewegungen der Koppelelemente. Ein gemeinsamer Antrieb kann vorteilhaft sein, wenn die Koppelelemente synchron angetrieben werden sollen.

Eine weitere Ausgestaltung der Erfindung sieht vor, dass jedes Kapselungsgehäuse einer Wechselstromphase eines Dreiphasenwechselstroms zugeordnet ist, um einen Strompfad der Wechselstromphase zu unterbrechen und zu schließen. Diese Ausgestaltung der Erfindung ist auf dreiphasige Schaltanlagen mit einphasiger Kapselung gerichtet.

Die Kapselungsgehäuse können beispielsweise jeweils ein Gehäuse eines Leistungsschalters oder Erdungsschalters oder Trennschalters sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein erstes Ausführungsbeispiel einer erfindungsgemäßen gasisolierten Schaltanlage,
- FIG 2: schematisch ein zweites Ausführungsbeispiel einer erfindungsgemäßen gasisolierten Schaltanlage.

Einander entsprechende Teile sind in den Figuren mit denselben Bezugszeichen versehen.

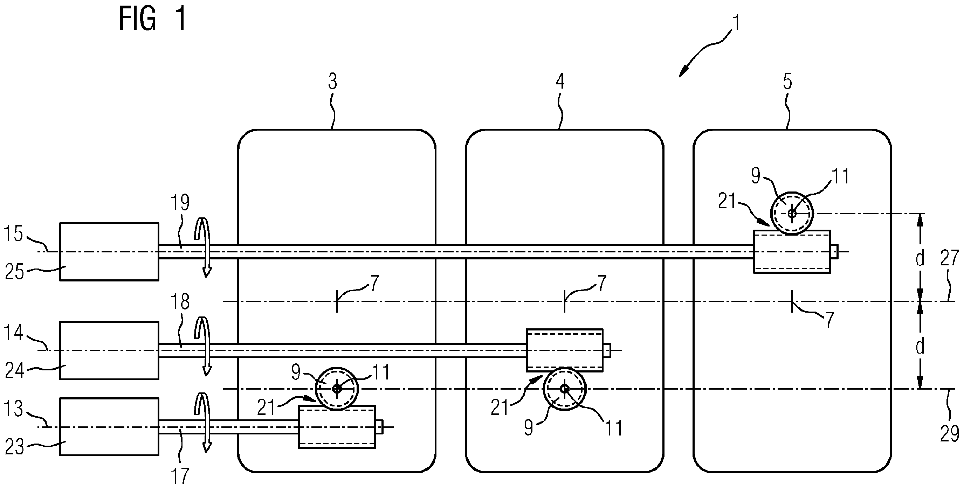

Figur 1 zeigt schematisch ein erstes Ausführungsbeispiel einer erfindungsgemäßen gasisolierten Schaltanlage 1. Die Schaltanlage 1 umfasst drei baugleiche Kapselungsgehäuse 3, 4, 5. Jedes Kapselungsgehäuse 3, 4, 5 ist im Wesentlichen achsensymmetrisch bezüglich einer Symmetrieachse 7, die senkrecht auf der Zeichenebene der Figur 1 steht.

In jedem Kapselungsgehäuse 3, 4, 5 erstreckt sich ein zum Öffnen und Schließen eines Schaltkontaktes antreibbares Antriebselement 9 entlang einer Antriebsachse 11, die parallel zu der Symmetrieachse 7 in einem Abstand d von der Symmetrieachse 7 verläuft. Jedes Antriebselement 9 ist als eine Antriebswelle ausgebildet, die um die Antriebsachse 11 drehbar gelagert ist und einen Endbereich aufweist, der aus dem jeweiligen Kapselungsgehäuse 3, 4, 5 herausgeführt ist.

Für jedes Antriebselement 9 weist die Schaltanlage 1 ferner ein sich entlang einer Koppelachse 13, 14, 15 erstreckendes Koppelelement 17, 18, 19 auf, das durch eine Getriebeeinheit 21 an den aus dem jeweiligen Kapselungsgehäuse 3, 4, 5 herausgeführten Endbereich des Antriebselements 9 gekoppelt und durch einen außerhalb der Kapselungsgehäuse angeordneten Antrieb 23, 24, 25 antreibbar ist. In dem in Figur 1 gezeigten Ausführungsbeispiel ist jedes Koppelelement 17, 18, 19 als eine Koppelwelle ausgebildet, die durch ihren Antrieb 23, 24, 25 um ihre Koppelachse 13, 14, 15 drehbar ist. Jede Getriebeeinheit 21 ermöglicht das Antreiben eines Antriebselements 9 durch ein Koppelelement 17, 18, 19, so dass Drehungen des Koppelelements 17, 18, 19 um dessen Koppelachse 13, 14, 15 Drehungen des Antriebselements 9 um dessen Antriebsachse 11 bewirken. Beispielsweise ist jede Getriebeeinheit 21 als ein Schneckengetriebe ausgebildet, das von einer an dem Koppelelement 17, 18, 19 angeordneten Schnecke und einem an dem Endbereich des Antriebselements 9 angeordneten Schneckenrad gebildet wird.

Die Kapselungsgehäuse 3, 4, 5 sind nebeneinander angeordnet, wobei die Symmetrieachsen 7 aller drei Kapselungsgehäuse 3, 4, 5 parallel zueinander in einer Symmetrieachsenebene 27 verlaufen. Dabei sind ein erstes Kapselungsgehäuse 3 und ein zweites Kapselungsgehäuse 4 zueinander parallel verschoben angeordnet, so dass die Antriebsachsen 11 dieser beiden Kapselungsgehäuse 3, 4 in einer zu der Symmetrieachsenebene 27 parallelen Antriebsachsenebene 29 in dem Abstand d zu der Symmetrieachsenebene 27 verlaufen. Das dritte Kapselungsgehäuse 5 ist gegenüber den beiden anderen Kapselungsgehäusen 3, 4 um 180 Grad um die Symmetrieachse 7 gedreht, so dass die Antriebsachse 11 des dritten Kapselungsgehäuses 5 in dem Abstand d von der Symmetrieachsenebene 27 auf einer anderen Seite der Symmetrieachsenebene 27 als die Antriebsachsenebene 29 verläuft.

Die Koppelachsen 13, 14, 15 der Koppelelemente 17, 18, 19 verlaufen parallel zueinander und senkrecht zu den Antriebsachsen 11. Ein erstes Koppelelement 17, das an das Antriebselement 9 des ersten Kapselungsgehäuses 3 gekoppelt ist, und ein zweites Koppelelement 18, das an das Antriebselement 9 des zweiten Kapselungsgehäuses 4 gekoppelt ist, sind auf voneinander verschiedenen Seiten der Antriebsachsenebene 29 angeordnet. Das dritte Koppelelement 19, das an das Antriebselement 9 des dritten Kapselungsgehäuses 3 gekoppelt ist, ist auf einer anderen Seite der Symmetrieachsenebene 27 aus die anderen beiden Koppelelemente 17, 18 angeordnet. Der Abstand d ist größer als die Summe des maximalen Querschnittdurchmessers eines Koppelelements 17, 18, 19 und der Hälfte des maximalen Querschnittdurchmessers eines Antriebselements 9.

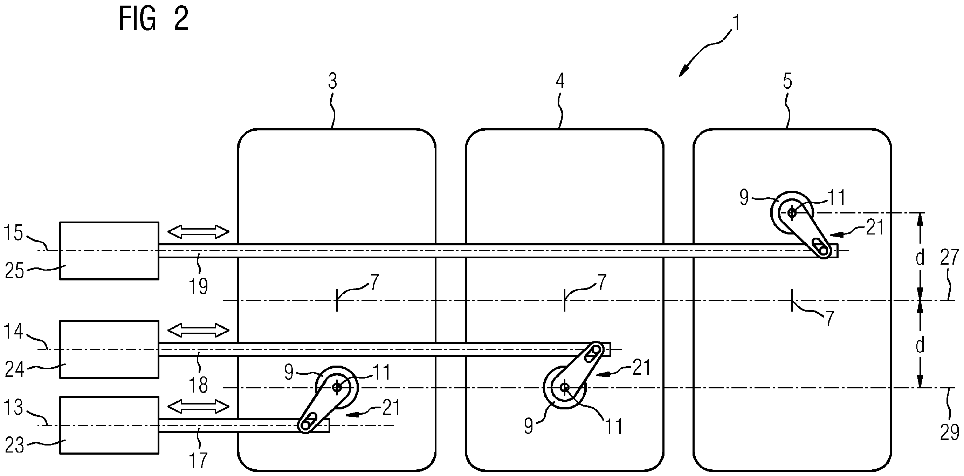

Figur 2 zeigt schematisch ein zweites Ausführungsbeispiel einer erfindungsgemäßen gasisolierten Schaltanlage 1. Dieses Ausführungsbeispiel unterscheidet sich von dem in Figur 1 gezeigten Ausführungsbeispiel im Wesentlichen nur durch die Ausführung der Koppelelemente 17, 18, 19 und Getriebeeinheiten 21. Die Koppelelemente 17, 18, 19 des zweiten Ausführungsbeispiels sind jeweils als eine Koppelstange ausgebildet, die durch ihren Antrieb 23, 24, 25 entlang ihrer Koppelachse 13, 14, 15 verschiebbar ist. Jede Getriebeeinheit 21 ermöglicht, dass Verschiebungen des jeweiligen Koppelelements 17, 18, 19 entlang dessen Koppelachse 13, 14, 15 Drehungen des entsprechenden Antriebselements 9 um dessen Antriebsachse 11 bewirken. In dem in Figur 2 gezeigten Ausführungsbeispiel weist jede Getriebeeinheit 21 dazu ein Hebelgetriebe auf. Alternativ kann jede Getriebeeinheit 21 aber beispielsweise auch von einer an dem Koppelelement 17, 18, 19 angeordneten Zahnstange und einem an dem Antriebselement 9 angeordneten, in die Zahnstange eingreifenden Zahnrad gebildet werden.

In den oben beschriebenen Ausführungsbeispielen können die Kapselungsgehäuse 3, 4, 5 beispielsweise jeweils ein Gehäuse eines Leistungsschalters oder Erdungsschalters oder Trennschalters sein. Ferner kann jedes Kapselungsgehäuse 3, 4, 5 beispielsweise einer Wechselstromphase eines Dreiphasenwechselstroms zugeordnet sein, um einen Strompfad der Wechselstromphase zu unterbrechen und zu schließen. Die in den Figuren gezeigten Ausführungsbeispiele können beispielsweise jeweils dahingehend abgewandelt werden, dass statt eines separaten Antriebs 23, 24, 25 für jedes Koppelelement 17, 18, 19 ein gemeinsamer Antrieb für alle Koppelelemente 17, 18, 19 vorgesehen ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die Ansprüche definiert ist.

## Patentansprüche

1. Gasisolierte Schaltanlage (1), umfassend
- drei baugleiche Kapselungsgehäuse (3, 4, 5), die jeweils im Wesentlichen achsensymmetrisch bezüglich einer Symmetrieachse (7) sind,
- für jedes Kapselungsgehäuse (3, 4, 5) ein zum Öffnen und Schließen eines Schaltkontaktes antreibbares Antriebselement (9), das sich in dem Kapselungsgehäuse (3, 4, 5) entlang einer Antriebsachse (11) erstreckt, die parallel zu der Symmetrieachse (7) des Kapselungsgehäuses (3, 4, 5) und von der Symmetrieachse (7) beabstandet verläuft, wobei die Anordnung des Antriebselements (9) in dem Kapselungsgehäuse (3, 4, 5) für alle Kapselungsgehäuse (3, 4, 5) übereinstimmt,
- für jedes Antriebselement (9) ein sich entlang einer Koppelachse (13, 14, 15) erstreckendes Koppelelement (17, 18, 19), das durch eine Getriebeeinheit (21) an das Antriebselement (9) gekoppelt und durch einen außerhalb der Kapselungsgehäuse (3, 4, 5) angeordneten Antrieb (23, 24, 25) antreibbar ist, wobei
- die Symmetrieachsen (7) aller drei Kapselungsgehäuse (3, 4, 5) parallel zueinander in einer Symmetrieachsenebene (27) verlaufen,
- die Antriebsachsen (11) eines ersten Kapselungsgehäuses (3) und eines zweiten Kapselungsgehäuses (4) in einer zu der Symmetrieachsenebene (27) parallelen und von der Symmetrieachsenebene (27) beabstandeten Antriebsachsenebene (29) verlaufen, **dadurch gekennzeichnet, dass**
die Antriebsachse (11) des dritten Kapselungsgehäuses (5) in demselben Abstand von der Symmetrieachsenebene (27) wie die Antriebsachsenebene (29) auf einer anderen Seite der Symmetrieachsenebene (27) als die Antriebsachsenebene (29) verläuft.

2. Gasisolierte Schaltanlage (1) nach Anspruch 1, wobei die Koppelachsen (13, 14, 15) aller drei Koppelelemente (17, 18, 19) parallel zueinander verlaufen.

3. Gasisolierte Schaltanlage (1) nach Anspruch 1 oder 2, wobei
die Koppelachsen (13, 14, 15) senkrecht zu den Antriebsachsen (11) verlaufen.

4. Gasisolierte Schaltanlage (1) nach einem der vorhergehenden Ansprüche, wobei
ein erstes Koppelelement (17), das an das Antriebselement (9) des ersten Kapselungsgehäuses (3) gekoppelt ist, und ein zweites Koppelelement (18), das an das Antriebselement (9) des zweiten Kapselungsgehäuses (4) gekoppelt ist, auf voneinander verschiedenen Seiten der Antriebsachsenebene (29) angeordnet sind.

5. Gasisolierte Schaltanlage (1) nach einem der vorhergehenden Ansprüche, wobei
der Abstand der Antriebsachsenebene (29) von der Symmetrieachsenebene (27) gleich dem Abstand der Antriebsachse (11) von der Symmetrieachse (7) eines Kapselungsgehäuses (3, 4, 5) ist.

6. Gasisolierte Schaltanlage (1) nach einem der vorhergehenden Ansprüche, wobei
jedes Koppelelement (17, 18, 19) als eine Koppelwelle ausgebildet ist, die durch den Antrieb (23, 24, 25) um ihre Koppelachse (13, 14, 15) drehbar ist.

7. Gasisolierte Schaltanlage (1) nach Anspruch 6, wobei
jedes Koppelelement (17, 18, 19) durch eine ein Schneckengetriebe aufweisende Getriebeeinheit (21) an ein Antriebselement (9) gekoppelt ist.

8. Gasisolierte Schaltanlage (1) nach einem der vorhergehenden Ansprüche, wobei jedes Koppelelement (17, 18, 19) als eine Koppelstange ausgebildet ist, die durch ihren Antrieb (23, 24, 25) entlang ihrer Koppelachse (13, 14, 15) verschiebbar ist.

9. Gasisolierte Schaltanlage (1) nach Anspruch 8, wobei
jedes Koppelelement (17, 18, 19) durch eine Getriebeeinheit (21), die ein Hebelgetriebe oder ein Zahnstangengetriebe aufweist, an ein Antriebselement (9) gekoppelt ist.

10. Gasisolierte Schaltanlage (1) nach einem der vorhergehenden Ansprüche, wobei
jedes Antriebselement (9) als eine um seine Antriebsachse (11) drehbare Antriebswelle ausgebildet ist.

11. Gasisolierte Schaltanlage (1) nach einem der vorhergehenden Ansprüche, wobei
die gasisolierte Schaltanlage (1) für jedes Koppelelement (17, 18, 19) einen separaten Antrieb (23, 24, 25) aufweist.

12. Gasisolierte Schaltanlage (1) nach einem der vorhergehenden Ansprüche, wobei
die gasisolierte Schaltanlage (1) einen gemeinsamen Antrieb für alle Koppelelemente (17, 18, 19) aufweist.

13. Gasisolierte Schaltanlage (1) nach einem der vorhergehenden Ansprüche, wobei
jedes Kapselungsgehäuse (3, 4, 5) einer Wechselstromphase eines Dreiphasenwechselstroms zugeordnet ist, um einen Strompfad der Wechselstromphase zu unterbrechen und zu schließen.

14. Gasisolierte Schaltanlage (1) nach einem der vorhergehenden Ansprüche, wobei
jedes Kapselungsgehäuse (3, 4, 5) ein Gehäuse eines Leistungsschalters oder Erdungsschalters oder Trennschalters ist.

## Claims

1. Gas-insulated switchgear installation (1), comprising
- three physically identical encapsulation housings (3, 4, 5) which are each substantially axially symmetrical with respect to an axis of symmetry (7),
- for each encapsulation housing (3, 4, 5), a drive element (9) which can be driven for opening and closing a switching contact and extends in the encapsulation housing (3, 4, 5) along a drive axis (11) which runs parallel to the axis of symmetry (7) of the encapsulation housing (3, 4, 5) and at a distance from the axis of symmetry (7), wherein the arrangement of the drive element (9) in the encapsulation housing (3, 4, 5) corresponds for all encapsulation housings (3, 4, 5),
- for each drive element (9), a coupling element (17, 18, 19) which extends along a coupling axis (13, 14, 15) and is coupled to the drive element (9) by a transmission unit (21) and can be driven by a drive (23, 24, 25) arranged outside the encapsulation housings (3, 4, 5), wherein
- the axes of symmetry (7) of all three encapsulation housings (3, 4, 5) run parallel to one another in an axis of symmetry plane (27),
- the drive axes (11) of a first encapsulation housing (3) and a second encapsulation housing (4) run in a drive axis plane (29) which is parallel to the axis of symmetry plane (27) and at a distance from the axis of symmetry plane (27), **characterized in that**
the drive axis (11) of the third encapsulation housing (5) runs at the same distance from the axis of symmetry plane (27) as the drive axis plane (29) on a different side of the axis of symmetry plane (27) than the drive axis plane (29).

2. Gas-insulated switchgear installation (1) according to Claim 1, wherein
the coupling axes (13, 14, 15) of all three coupling elements (17, 18, 19) run parallel to one another.

3. Gas-insulated switchgear installation (1) according to Claim 1 or 2, wherein
the coupling axes (13, 14, 15) run perpendicularly to the drive axes (11).

4. Gas-insulated switchgear installation (1) according to one of the preceding claims, wherein
a first coupling element (17), which is coupled to the drive element (9) of the first encapsulation housing (3), and a second coupling element (18), which is coupled to the drive element (9) of the second encapsulation housing (4), are arranged on different sides of the drive axis plane (29).

5. Gas-insulated switchgear installation (1) according to one of the preceding claims, wherein
the distance of the drive axis plane (29) from the axis of symmetry plane (27) is equal to the distance of the drive axis (11) from the axis of symmetry (7) of an encapsulation housing (3, 4, 5).

6. Gas-insulated switchgear installation (1) according to one of the preceding claims, wherein
each coupling element (17, 18, 19) is in the form of a coupling shaft which can be rotated about its coupling axis (13, 14, 15) by the drive (23, 24, 25).

7. Gas-insulated switchgear installation (1) according to Claim 6, wherein
each coupling element (17, 18, 19) is coupled to a drive element (9) by a transmission unit (21) having a worm gear.

8. Gas-insulated switchgear installation (1) according to one of the preceding claims, wherein
each coupling element (17, 18, 19) is in the form of a coupling rod which can be displaced along its coupling axis (13, 14, 15) by its drive (23, 24, 25).

9. Gas-insulated switchgear installation (1) according to Claim 8, wherein
each coupling element (17, 18, 19) is coupled to a drive element (9) by a transmission unit (21) which has a lever gear or a rack-and-pinion gear.

10. Gas-insulated switchgear installation (1) according to one of the preceding claims, wherein
each drive element (9) is in the form of a drive shaft which can rotate about its drive axis (11).

11. Gas-insulated switchgear installation (1) according to one of the preceding claims, wherein
the gas-insulated switchgear installation (1) has a separate drive (23, 24, 25) for each coupling element (17, 18, 19).

12. Gas-insulated switchgear installation (1) according to one of the preceding claims, wherein
the gas-insulated switchgear installation (1) has a common drive for all coupling elements (17, 18, 19).

13. Gas-insulated switchgear installation (1) according to one of the preceding claims, wherein
each encapsulation housing (3, 4, 5) is associated with one alternating current phase of a three-phase alternating current in order to interrupt and to close a current path of the alternating current phase.

14. Gas-insulated switchgear installation (1) according to one of the preceding claims, wherein
each encapsulation housing (3, 4, 5) is a housing of a circuit breaker or earthing switch or isolating switch.

## Revendications

1. Installation (1) de distribution à isolation par du gaz, comprenant
- trois boîtiers (3, 4, 5) de blindage de même construction, qui sont chacun sensiblement à symétrie axiale par rapport à un axe (7) de symétrie,
- pour chaque boîtier (3, 4, 5) de blindage, un élément (9) d'entraînement, qui peut être entraîné pour ouvrir et fermer un contact de coupure et qui s'étend dans le boîtier (3, 4, 5) de blindage suivant un axe (11) d'entraînement, qui s'étend parallèlement à l'axe (7) de symétrie du boîtier (3, 4, 5) de blindage et est à distance de l'axe (7) de symétrie, l'agencement de l'élément (9) d'entraînement dans le boîtier (3, 4, 5) de blindage coïncidant pour tous les boîtiers (3, 4, 5) de blindage,
- pour chaque élément (9) d'entraînement, un élément (17, 18, 19) d'accouplement, qui s'étend le long d'un axe (13, 14, 15) d'accouplement, qui est accouplé à l'élément (9) d'entraînement par une unité (21) d'engrenage et qui peut être entraîné par un entraînement (23, 24, 25) disposé à l'extérieur du boîtier (3, 4, 5) de blindage, dans laquelle
- les axes (7) de symétrie de tous les trois boîtiers (3, 4, 5) de blindage s'étendent parallèlement entre eux dans un plan (27) des axes de symétrie,
- les axes (11) d'entraînement d'un premier boîtier (3) de blindage et d'un deuxième boîtier (4) de blindage s'étendent dans un plan (29) des axes d'entraînement parallèle au plan (27) des axes de symétrie et à distance du plan (27) des axes de symétrie,
**caractérisée en ce que**
l'axe (11) d'entraînement du troisième boîtier (5) de blindage s'étend à la même distance du plan (27) des axes de symétrie que le plan (29) des axes d'entraînement, d'un côté autre du plan (27) des axes de symétrie que le plan (29) des axes d'entraînement.

2. Installation (1) de distribution à isolation par du gaz suivant la revendication 1,
dans laquelle
les axes (13, 14, 15) d'accouplement de tous les trois éléments (17, 18, 19) d'accouplement s'étendent parallèlement entre eux.

3. Installation (1) de distribution à isolation par du gaz suivant la revendication 1 ou 2,
**caractérisée en ce que**
les axes (13, 14, 15) d'accouplement s'étendent perpendiculairement aux axes (11) d'entraînement.

4. Installation (1) de distribution à isolation par du gaz suivant l'une des revendications précédentes,
dans laquelle
un premier élément (17) d'accouplement, qui est accouplé à l'élément (9) d'entraînement du premier boîtier (3) de blindage, et un deuxième élément (18) d'accouplement, qui est accouplé à l'élément (9) d'entraînement du deuxième boîtier (4) de blindage, sont disposés sur des côtés différents l'un de l'autre du plan (29) des axes d'entraînement.

5. Installation (1) de distribution à isolation par du gaz suivant l'une des revendications précédentes,
dans laquelle
la distance du plan (29) des axes d'entraînement au plan (27) des axes de symétrie est égale à la distance de l'axe (11) d'entraînement à l'axe (7) de symétrie d'un boîtier (3, 4, 5) de blindage.

6. Installation (1) de distribution à isolation par du gaz suivant l'une des revendications précédentes,
dans laquelle
chaque élément (17, 18, 19) d'accouplement est constitué sous la forme d'un arbre d'accouplement, qui peut être entraîné en rotation autour de son axe (13, 14, 15) d'accouplement par l'entraînement (23, 24, 25).

7. Installation (1) de distribution à isolation par du gaz suivant la revendication 6,
dans laquelle
chaque élément (17, 18, 19) d'accouplement est accouplé à un élément (9) d'entraînement par une unité (21) d'engrenage ayant une mécanisme à vis.

8. Installation (1) de distribution à isolation par du gaz suivant l'une des revendications précédentes,
dans laquelle
chaque élément (17, 18, 19) d'accouplement est constitué sous la forme d'une barre d'accouplement, qui peut, par son entraînement (23, 24, 25), coulisser le long de son axe (13, 14, 15) d'accouplement.

9. Installation (1) de distribution à isolation par du gaz suivant la revendication 8,
dans laquelle
chaque élément (17, 18, 19) d'accouplement est accouplé à un élément (9) d'entraînement par une unité (21) d'engrenage, qui a un engrenage à levier ou un engrenage à crémaillère.

10. Installation (1) de distribution à isolation par du gaz suivant l'une des revendications précédentes,
dans laquelle
chaque élément (9) d'entraînement est constitué sous la forme d'un arbre d'entraînement pouvant tourner autour de son axe (11) d'entraînement.

11. Installation (1) de distribution à isolation par du gaz suivant l'une des revendications précédentes,
dans laquelle
l'installation (1) de distribution à isolation par du gaz a un entraînement (23, 24, 25) distinct pour chaque élément (17, 18, 19) d'accouplement.

12. Installation (1) de distribution à isolation par du gaz suivant l'une des revendications précédentes,
dans laquelle
l'installation (1) de distribution à isolation par du gaz a un entraînement commun à tous les éléments (17, 18, 19) d'accouplement.

13. Installation (1) de distribution à isolation par du gaz suivant l'une des revendications précédentes,
dans laquelle
chaque boîtier (3, 4, 5) de blindage est affecté à une phase de courant alternatif d'un courant alternatif triphasé pour interrompre et fermer un trajet de courant de la phase de courant alternatif.

14. Installation (1) de distribution à isolation par du gaz suivant l'une des revendications précédentes,
dans laquelle
chaque boîtier (3, 4, 5) de blindage est un boîtier d'un disjoncteur ou d'un interrupteur de mise à la terre ou d'un sectionneur.
